# FASCICULE DE BREVET EUROPEEN

(11) **EP 2 459 901 B1**
(45) Date de publication et mention de la délivrance du brevet: **28.08.2013**
(21) Numéro de dépôt: 10747921.4
(22) Date de dépôt: 22.07.2010
(51) Int. Cl.: F16H 7/12

(54) **TENDEUR HYDRAULIQUE PILOTABLE**
STEUERBARES HYDRAULISCHES SPANNSCHLOSS
CONTROLLABLE HYDRAULIC TURNBUCKLE

(30) Priorité: 30.07.2009 FR 0903769
(43) Date de publication de la demande: 06.06.2012
(73) Titulaire: Hutchinson, 75008 Paris (FR)
(72) Inventeur: SIX, Marc-François, F-45120 Corquilleroy (FR); LAMBERT, Pascal, F-45290 Pressigny-les-pins (FR)
(74) Mandataire: Corret, Hélène
(86) Numéro de dépôt international: PCT/FR2010/000533
(87) Numéro de publication internationale: WO 2011/015719

(56) Documents cités:
- DE-A1- 19 943 402
- DE-U1- 29 508 244
- JP-A- 2006 266 377
- US-A1- 2004 087 398
- US-A1- 2005 064 970

## Description

L'invention se rapporte à un tendeur hydraulique linéaire pour un organe de transmission de puissance ayant deux modes de fonctionnement, en particulier mais non exclusivement pour un organe réversible pouvant être moteur ou récepteur, notamment un alterno-démarreur séparé du vilebrequin d'un moteur thermique et équipé d'un tel tendeur, ainsi qu'à un système d'entraînement de moteur thermique pour véhicule automobile, ce système comportant notamment un alterno-démarreur et un vilebrequin équipés tous deux de poulies de transmission reliées par une courroie dont la tension est assurée par ledit tendeur.

Le domaine concerné est celui de la transmission de puissance et vise plus particulièrement, mais non exclusivement, les systèmes d'entraînement réversible de moteur thermique de véhicule automobile, notamment entre un vilebrequin et un alterno-démarreur reliés par un lien élastique tel qu'une courroie.

L'invention peut également s'appliquer à tous les domaines qui nécessitent une transmission de puissance par des machines tournantes ou des moteurs, par exemple dans des installations industrielles.

Il est connu d'intégrer la fonction démarreur d'un moteur thermique sur l'alternateur, appelé alors alterno - démarreur. Cette intégration permet de supprimer le démarreur, couronne dentée lourde couplée à un volant de forte inertie et à un démarreur électrique.

L'alterno-démarreur sert à la fois de moteur, pour réaliser le démarrage du moteur thermique à travers un lien souple, la poulie de vilebrequin se comportant alors comme un frein, puis de récepteur une fois le moteur démarré afin de recharger la batterie (fonction alternateur).

L'intégration peut se faire soit par couplage direct de l'alternateur monté sur l'arbre du vilebrequin, appelé alors Alterno - Démarreur Intégré (A.D.I.), soit par un Alterno - Démarreur dans une transmission par courroie (en remplacement de l'alternateur classique), appelé Alterno - Démarreur Séparé (A.D.S.)

Il s'avère que la solution intégrée (A.D.I.) empêche une bonne adaptabilité au montage / démontage du système et, surtout, impose des démarrages brutaux et incontrôlés.

La solution séparée (A.D.S.), avec un entraînement par courroie entre les deux organes, vilebrequin et alternateur, permet une plus grande adaptabilité au montage et un démarrage plus feutré. La courroie est de type poly-V, crantée ou trapézoïdale. La présente invention lorsqu'elle s'applique à un alterno-démarreur appartient à cette catégorie.

La mise en route d'un moteur thermique est un phénomène dynamique brutal qui fluctue rapidement en fonction des frottements internes, variables selon l'état de l'embiellage et des mises en compression successives.

Dans cette phase de démarrage sous forte sollicitation, la vitesse du vilebrequin augmente brusquement et le couple vilebrequin varie de résistant à moteur. Dans ces conditions, le couple de l'alterno-démarreur fluctue lui-même, respectivement, entre moteur et résistant.

Après le démarrage, en régime dit « démarré », le vilebrequin devient moteur et l'alterno-démarreur récepteur. Dans ce mode de fonctionnement, la vitesse instantanée du vilebrequin fluctue alors sensiblement de manière sinusoïdale : c'est le phénomène connu d'acyclisme du moteur. Ces fluctuations de vitesse sont transmises par la courroie aux organes récepteurs, tels qu'alternateur (ici l'alterno-démarreur en mode alternateur), compresseur, pompe à eau.

Avec un alterno-démarreur, les inerties étant élevées, les couples dynamiques générés ont de fortes amplitudes en mode démarré, en alternance positives et négatives malgré la rotation en un seul sens : ces couples génèrent des variations de tension importantes, avec des niveaux de tensions maximales et de fortes sollicitations pour les composants (courroies, tendeurs de roulement d'organe ou enrouleurs) et de tensions minimales faibles pouvant provoquer un mauvais entraînement (glissement) et du bruit.

Les deux modes de fonctionnement peuvent être définis comme suit :
A) En mode démarrage du moteur, le couple à développer par l'alternato/démarreur pour entraîner le vilebrequin peut atteindre des valeurs de l'ordre de 90 N.m max . Ceci permet d'entraîner des vilebrequins ayant un couple résistant entre 180 N.m et 270 N.m (avec un rapport de réduction de 2 à 3).

Un démarreur classique est capable de délivrer typiquement un couple moteur de l'ordre de 30 N.m au maximum, ce qui permet de délivrer un couple maximum sur le vilebrequin de 90 N.m avec un rapport de réduction typiquement de 3 entre les deux organes.

Lorsque des couples nettement supérieurs à ceux d'un alternateur classique doivent être fournis sur le vilebrequin, les variations de couple sont importantes et les à-coups provoquent alors des vibrations dans la transmission par l'intermédiaire de la courroie, ainsi que des glissements de la courroie.

Il convient également d'observer que les valeurs positives et négatives du couple ne sont pas nécessairement symétriques, du fait des asymétries des effets d'amortissement (par frottement) et de dissymétries mécaniques dans les mouvements, tant en régime démarrage que démarré.
B) En mode démarré, le couple à délivrer est une combinaison :
   - du couple dynamique généré par les inerties de l'alterno-démarreur et par l'acyclisme du moteur
   - du couple électrique nécessaire à l'alimentation électrique (fonction alternateur)

En mode démarré, les couples à transmettre sont beaucoup plus faibles qu'en mode démarrage

Les deux modes de fonctionnement sont donc très distincts.

Le tendeur doit pouvoir répondre à ces deux modes, en faisant fonctionner le produit différemment entre les deux modes :
- Réponse rapide avec aptitude à fournir beaucoup d'effort en mode démarrage, en maintenant une tension minimale suffisante pour limiter le glissement de la courroie et assurer le démarrage du moteur
- Limitation des efforts en mode démarré à une valeur suffisante pour entraîner les accessoires sans glissement de la courroie sans trop charger les paliers d'accessoires et la courroie.

Les tendeurs hydrauliques classiques ne permettent pas d'assurer correctement les deux modes simultanément.

On peut en effet distinguer deux catégories :

### 1) Systèmes ni pilotés, ni bloqués

Ils fournissent :
- soit trop peu d'effort possible en mode démarrage, par exemple le dispositif décrit dans la demande de Brevet FR2688565 (HUTCHINSON)
- soit trop d'efforts en mode démarré, par exemple le dispositif décrit dans le Brevet US 6036612 (NTN).

### 2) Tendeurs pilotés ou avec blocage par tout ou rien au démarrage

Ces tendeurs fonctionnent, soit grâce à un blocage complet au démarrage du tendeur, et ils se comportent comme un tendeur fixe comme par exemple le tendeur décrit dans la Demande PCT WO 02/29287 (GATES Corp.), soit avec un pilotage externe de la pression du fluide d'amortissement par une servo-vanne à commande électrique (par exemple comme dans la Demande PCT WO2006/053617 de la Société INA-SCHAEFFLER KG). Le document US 2005/0064970 montre un tendeur selon le préambule de la revendication 1.

Les tendeurs pilotés sont très compliqués et peuvent être d'un encombrement important, les moyens de pilotage étant situés en saillie ou encore à l'extérieur par rapport au contour général d'un tendeur non piloté. De plus, une logique de commande doit être réalisée entre un signal d'entrée (informations de vitesse, de charge du moteur et/ou des accessoires) et le signal de sortie attendu (effort/course du tendeur).

C'est un but de l'invention d'éviter au moins en partie les inconvénients précédents grâce à un tendeur hydraulique pilotable permettant d'assurer les deux modes de fonctionnement et ce, de façon indépendante.

Un autre but de l'invention est de proposer un tendeur hydraulique pilotable dont l'encombrement correspond à l'encombrement normal d'un tendeur non piloté et dont le fonctionnement et la commande sont simples.

Ainsi, l'invention concerne un tendeur hydraulique pilotable pour un organe de transmission de puissance ayant un premier mode de fonctionnement avec des efforts élevés et un deuxième mode de fonctionnement avec des efforts moins élevés, caractérisé en ce qu'il comporte :
- un premier et un deuxième éléments de montage respectivement inférieur et supérieur, disposés à des extrémités axiales opposées,
- un tube solidaire du premier élément de montage à l'intérieur duquel coulisse un piston solidaire du deuxième élément de montage,
- un manchon élastique entourant le tube et le piston et relié de manière étanche aux premier et deuxième éléments de montage, ce manchon élastique définissant une chambre basse pression pour un fluide hydraulique,
- un ressort précontraint entre le premier et le deuxième éléments de montage,
- un premier canal ménagé dans le premier élément de montage pour mettre en communication la chambre basse pression et l'intérieur du tube, ledit premier canal étant muni, à son extrémité débouchant dans le tube, d'un premier dispositif d'obturation,
- un deuxième canal ménagé dans ledit piston, dont une extrémité débouche à l'intérieur du tube à travers une partie inférieure du piston, ledit deuxième canal étant susceptible de relier une chambre haute pression située entre les extrémités débouchantes des premier et deuxième canaux et la chambre basse pression,
- un deuxième dispositif d'obturation disposé dans le deuxième canal et mobile entre une position ouverte et une position fermée, ledit deuxième dispositif d'obturation étant associé à des moyens de commande situés dans le piston.

De façon préférée, les moyens de commande comprennent une bobine électromagnétique susceptible d'être alimentée en courant pour créer un champ magnétique passant par le deuxième dispositif d'obturation.

Ainsi, le deuxième dispositif d'obturation comprend une pièce d'obturation en matériau magnétique, l'alimentation en courant de la bobine provoquant le déplacement de ladite pièce d'obturation contre la partie inférieure du piston, elle-même en matériau magnétique, le deuxième dispositif d'obturation étant alors en position fermée.

Dans une variante de réalisation, le deuxième dispositif d'obturation comprend également une bille placée dans une cavité de ladite pièce d'obturation débouchant vers la partie inférieure du piston, ladite bille étant destinée à obturer ledit deuxième canal en position fermée du dispositif d'obturation.

Les parois en regard de la pièce d'obturation et de la paroi inférieure du piston peuvent être coniques ou sensiblement planes.

Dans cette deuxième variante, la paroi comporte, de préférence, autour du deuxième canal, un siège pour ladite bille.

La pièce d'obturation est, de préférence, de forme générale cylindrique.

De façon préférée, la pièce d'obturation comporte au moins un orifice s'étendant selon l'axe du tendeur et sur toute la hauteur de ladite pièce.

Ledit au moins un orifice débouche avantageusement sur la paroi extérieure cylindrique de ladite pièce.

Le deuxième canal comporte également des moyens de limitation du mouvement de ladite pièce d'obturation, à l'écart de la partie inférieure du piston.

Dans un mode de réalisation, le premier dispositif d'obturation comporte une bille sensible à la gravité.

Avantageusement, le premier élément de montage présente un élément de fixation sur lequel est monté un premier embout comportant ledit premier canal, tandis que le deuxième élément de montage présente un élément de fixation sur lequel est monté un deuxième embout sur lequel est monté ledit piston.

D'autres caractéristiques et avantages de l'invention apparaîtront mieux à la lecture de la description qui va suivre, donnée à titre d'exemple non limitatif, en liaison avec les dessins dans lesquels :
- la figure 1 est une vue schématique d'un système de transmission de puissance par courroie utilisant un tendeur hydraulique pilotable selon l'invention.
- la figure 2 est une vue en coupe longitudinale partielle d'un tendeur selon l'invention, dans un état monté et libre, moteur à l'arrêt,
- la figure 3 est une vue en coupe partielle selon III-III du tendeur de la figure 2, dans un état de compression,
- la figure 4 est une vue agrandie de la partie inférieure du piston du tendeur illustré à la figure 2 (état libre),
- la figure 5 est une vue agrandie de la partie inférieure du piston du tendeur illustré à la figure 3 (état de compression, mode démarrage),
- la figure 6 est une vue similaire à la figure 5 pour le tendeur illustré à la figure 2 (état de compression, mode démarré)
- la figure 7 est une vue partielle en coupe selon VII-VII de la figure 6,
- la figure 8 est une vue en perspective d'un deuxième dispositif d'obturation du tendeur selon l'invention tel qu'illustré sur la figure 7,
- la figure 9 illustre une variante de réalisation du tendeur selon l'invention,
- la figure 10 est une vue agrandie d'un détail de la figure 9,
- la figure 11 illustre deux courbes montrant l'évolution de la force d'amortissement du tendeur en fonction de la vitesse linéaire de compression lorsque le deuxième dispositif d'obturation est à l'état fermé (C₁) ou à l'état ouvert (C₂) et
- la figure 12 illustre une autre variante de réalisation du tendeur selon l'invention.

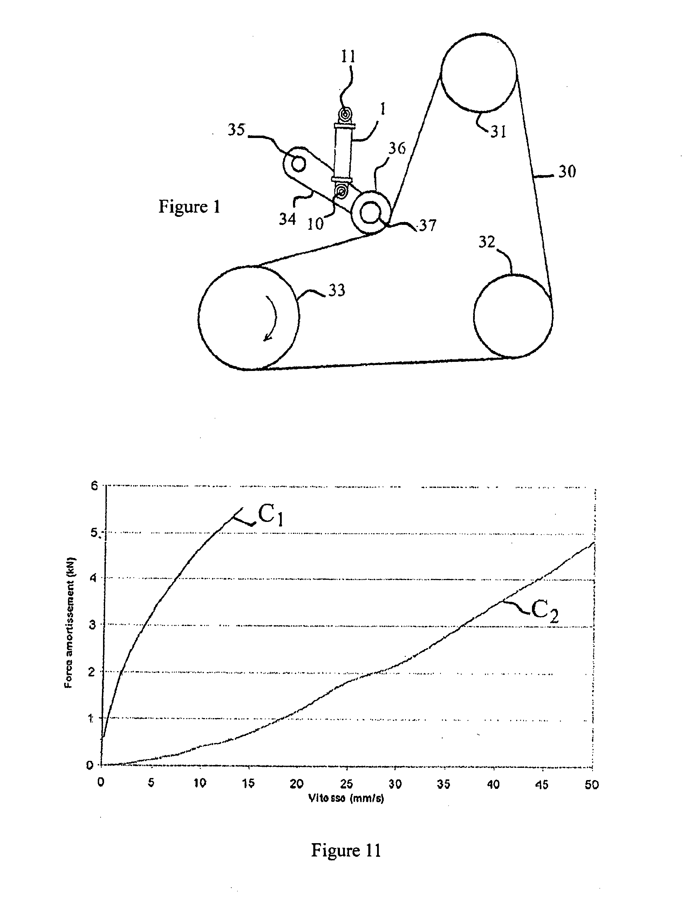

On se réfère tout d'abord à la figure 1 qui illustre schématiquement un système de transmission de puissance dans lequel une courroie 30 coopère avec les poulies 31 et 32, solidaires en rotation d'arbres menés et avec une poulie 33 solidaire d'un arbre menant, par exemple le vilebrequin d'un moteur automobile ou analogue.

Pour assurer la tension de la courroie 30, est associé au système un tendeur 1, accroché au niveau de l'élément de montage inférieur 10 à un levier 34. Ce levier est monté à pivotement, à une de ses extrémités, autour d'un axe 35 et il porte, à son autre extrémité, un galet 36 tournant autour d'un axe 37 et appuyant sur la courroie 30.

Le tendeur 1 comporte également un élément de montage supérieur 11 qui est fixé au bloc moteur, non représenté sur la figure 1.

Le tendeur 1 est destiné, d'une part, à rattraper l'allongement de la courroie 30 afin d'éviter le glissement de celle-ci par rapport aux poulies et d'autre part, à amortir les vibrations engendrées dans la courroie 30 par les irrégularités cycliques du régime moteur, en particulier au ralenti, ou lors des à-coups engendrés par la mise en route et/ou l'arrêt des appareils entraînés par les arbres solidaires des poulies 31 et 32.

Comme illustré sur la figure 1, le point de fixation du tendeur 1 sur le bloc moteur (élément de montage supérieur 11) et le galet 36 se trouvent avantageusement du même côté de la courroie, de façon à ce qu'une diminution de la tension de la courroie entraîne une augmentation de la distance séparant les éléments de montage inférieur et supérieur 10 et 11, et inversement.

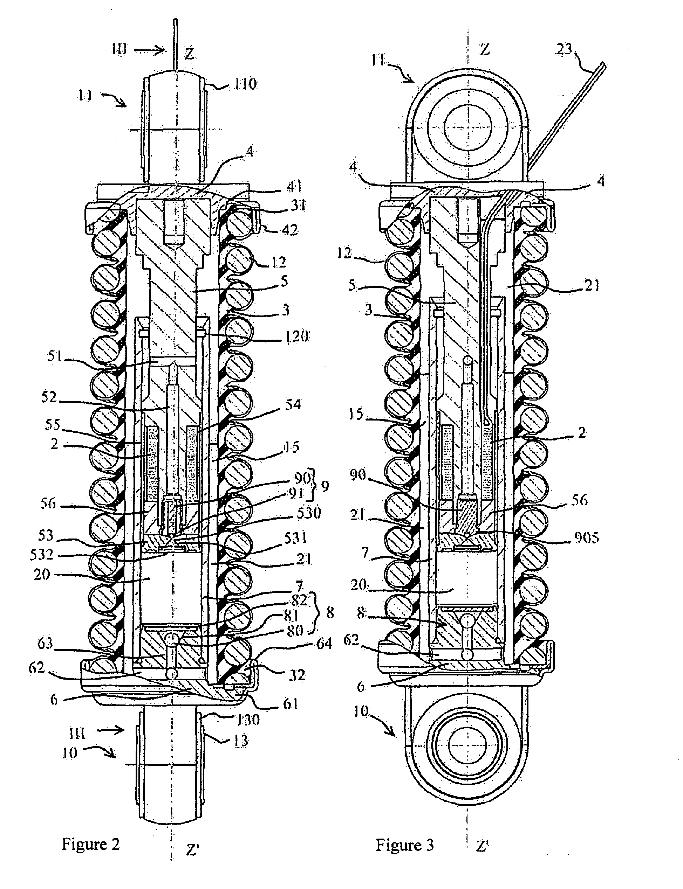

La description va maintenant être poursuivie au regard de la figure 2 qui illustre, en coupe longitudinale, un tendeur selon l'invention.

Ce tendeur 1 représenté en coupe longitudinale à la figure 2 est destiné à être monté en position verticale (axe ZZ' vertical) comme illustré à la figure 1 ou bien incliné d'un angle de 40° à 45° au plus.

Sur la figure 2, le tendeur 1 est à l'état monté et libre, c'est-à-dire qu'aucune contrainte dynamique n'est exercée sur lui. En pratique, le moteur auquel est associé le système de transmission de la figure 1, est à l'arrêt.

L'élément de montage inférieur 10 comporte par exemple un insert 13 en appui sur un palier lisse 130, destiné à être relié au bras articulé 34 équipé du galet 36 qui sert à tendre la courroie 30, alors que l'élément de montage supérieur 11 présente un palier lisse 110 destiné à être monté côté moteur, cet élément 11 étant fixe.

Le tendeur présente un ressort 12 de raideur déterminée, par exemple de 30 N/mm. A l'état monté, le tendeur est précontraint pour limiter la course de montage. La précontrainte est obtenue grâce à un clip 120 formant une butée qui empêche que le piston 5 du tendeur ne remonte vers le haut. L'effort de précontrainte est par exemple de l'ordre 600 N.

Un manchon souple 3 par exemple en caoutchouc, monté étanche, définit le contour externe d'une chambre basse pression 21 contenant de l'huile 15.

Dans les exemples illustrés sur les figures, le manchon et le ressort sont solidarisés par surmoulage.

L'invention n'est pas limitée à ce mode de réalisation et le manchon et le ressort pourraient également être désolidarisés.

Ce manchon 3 est maintenu rigidement par ses collerettes d'extrémité 31 et 32 sur les deux embouts supérieur et inférieur 4 et 6, grâce à des coupelles 42 et 64 épaulées reposant sur les faces planes de collerettes 41 et 61 des embouts 4 et 6. Les coupelles 42 et 64 sont maintenues axialement en appui sur les collerettes 41 et 61 par l'effort de compression du ressort 12, ce qui permet d'assurer l'étanchéité.

L'embout inférieur 6 est lié rigidement à l'insert pour rotule 13 grâce à une vis (non représentée) passant à travers l'insert 13 et serrée axialement sur celui-ci. L'embout supérieur 4 est lié à l'insert pour rotule 11 articulé par une vis (non représentée) passant à travers l'insert 11 et serrée axialement sur celui-ci.

Un tube 7 est lié rigidement à l'embout inférieur 6. L'embout 6 comporte au moins un canal radial 62 communiquant avec la chambre basse pression 21, comprise entre le tube 7 et le manchon 3 et fermée à ses extrémités axiales par les embouts 4 et 6.

Dans l'embout 6, un canal axial 63 est aménagé qui débouche à l'intérieur du tube 7, dans la chambre haute pression 20 délimitée par l'extrémité supérieure de l'embout 6, l'extrémité inférieure du piston 5 et le tube 7, et qui est relié au canal radial 62.

A l'extrémité du canal axial 63 débouchant dans la chambre 20, est prévu un premier dispositif d'obturation 8. Celui-ci comporte une bille 80 qui repose par son poids sur un siège 81, par exemple tronconique, sur lequel débouche le canal 63. La bille 80 ne peut s'échapper dans la chambre haute pression 20, grâce à un chapeau 82 solidaire de l'embout inférieur 6.

Le piston 5 est lié rigidement à l'embout supérieur 4. Ce piston 5 comporte au moins un canal radial 51 communiquant entre l'extérieur du piston et l'intérieur du tube 7. Sur le piston 5, un canal axial 52 est également aménagé qui débouche dans la chambre haute pression 20 à travers la partie inférieure 53 du piston. Pour cela, la partie inférieure 53 est percée d'un orifice calibré 530 qui débouche dans une cavité tronconique 531 qui, elle-même, débouche dans la chambre haute pression 20.

L'orifice calibré 530 est centré sur l'axe ZZ' du tendeur 1.

La figure 2 illustre également un filtre 532 qui évite que d'éventuelles particules présentes dans l'huile ne passent par l'orifice calibré 530.

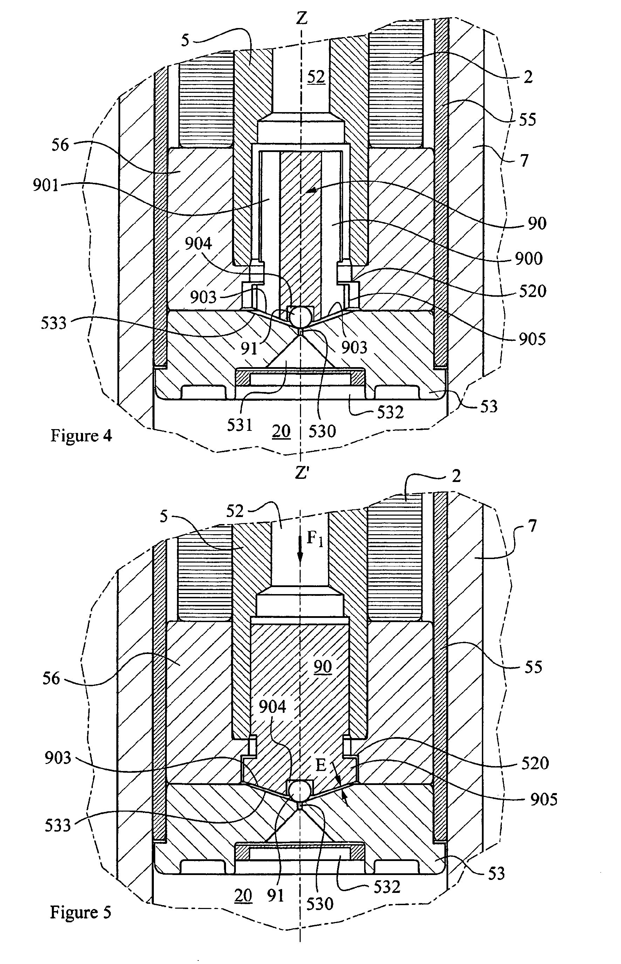

Dans le canal 52, est prévu un deuxième dispositif d'obturation 9 qui comporte une pièce d'obturation 90 ou pointeau qui est illustrée de façon agrandie sur les figures 4 à 6.

La partie inférieure du canal 52 est élargie pour recevoir la pièce 90.

Cette pièce présente une forme générale cylindrique et, de façon préférée, au moins un orifice s'étendant axialement.

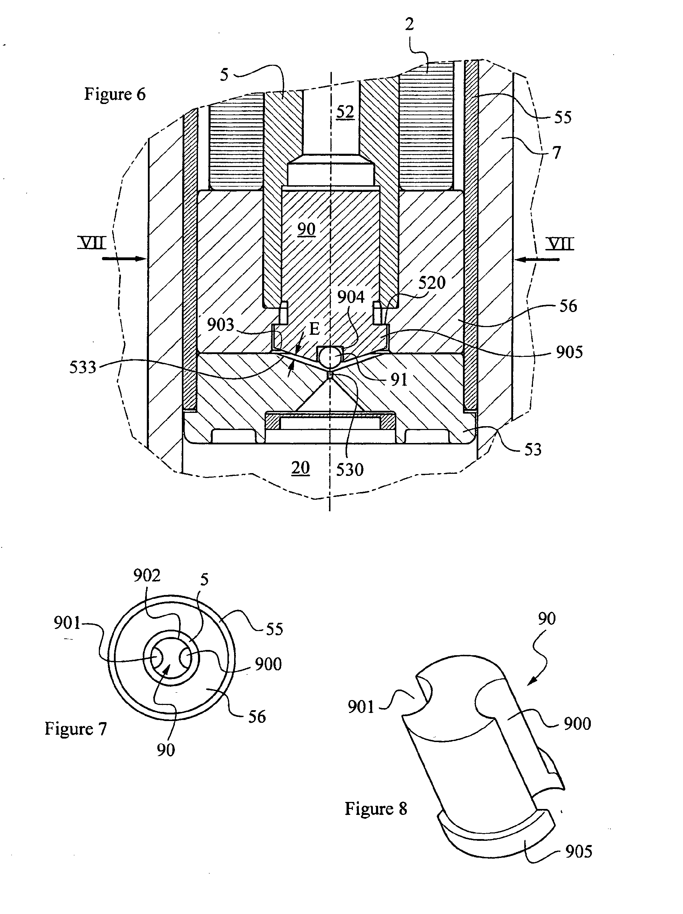

Ainsi, la figure 7 illustre en coupe transversale (selon la ligne VII-VII de la figure 6) la pièce 90. Elle montre deux orifices axiaux 900 et 901 qui, ici, débouchent sur la paroi externe cylindrique 902 de la pièce 90. Cette dernière est également illustrée, en perspective, sur la figure 8.

A titre d'exemple, la section totale des orifices 900 et 901 est supérieure à 10 fois la section de l'orifice calibré 530.

Dans l'exemple de réalisation illustré aux figures 2 à 6, la pièce 90 comporte, sur sa paroi axiale inférieure 903, une cavité sensiblement cylindrique 904 qui est centrée sur l'axe ZZ' du tendeur. Dans cette cavité 904, est prévue une bille 91, Un jeu radial est ménagé entre la bille 91 et la cavité 904.

Dans l'exemple illustré sur les figures 2 à 6, la paroi 903 est tronconique et la paroi en regard 533 de la partie inférieure 53 du piston est également tronconique. Les pentes des parois 903 et 533 sont sensiblement identiques et ménagent un entrefer E.

Comme le montrent de façon plus précise les figures 4 à 6, la pièce d'obturation 90 comporte, du côté de la partie inférieure 53 du piston ou encore du côté de la bille 91, une tête élargie 905.

Cette tête élargie 905 vient en butée contre un épaulement 520 du canal 52 lorsque la pièce 90 coulisse dans le canal 52 selon la flèche F, ce qui limite son déplacement.

Au deuxième dispositif d'obturation 9 sont associés des moyens de commande composés essentiellement d'une bobine électromagnétique 2.

Comme l'illustre notamment la figure 2, cette bobine 2 est logée à l'intérieur du corps du piston 5.

Ainsi, une cavité annulaire 54 est formée dans le corps du piston 5. Cette cavité s'étend selon l'axe ZZ' du tendeur et débouche sur la paroi cylindrique extérieure du corps du piston 5.

La bobine 2 est typiquement une bobine à fil de cuivre émaillé qui est bobiné sur le corps du piston, autour de l'axe ZZ' du tendeur.

Le corps du piston 5 est réalisé en un matériau magnétique, comme la chemise 55 qui ferme la cavité 54 et qui s'étend jusque dans la partie inférieure 53 du piston. De même, la pièce d'obturation 90 et la partie inférieure 53 du piston sont réalisées en un matériau magnétique.

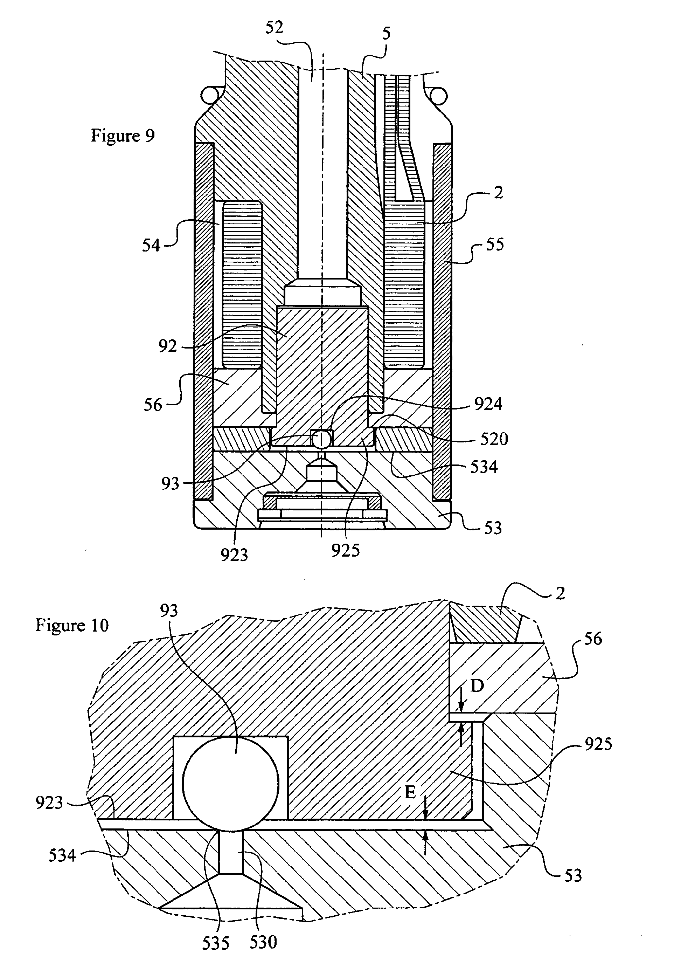

Dans l'exemple de réalisation illustré sur les figures 2 à 6, ainsi que dans celui illustré sur les figures 9 et 10, une pièce 56 en matériau amagnétique est prévue axialement, entre la bobine 2 et la partie inférieure 53 du piston 5. Cependant, comme cela sera expliqué dans la suite de la description, cette pièce en matériau amagnétique pourrait être supprimée dans d'autres modes de réalisation du tendeur.

La bobine 2 est alimentée en courant par des moyens 23 qui sont notamment illustrés sur la figure 3.

La chemise 55 assure plusieurs fonctions, et en particulier, une fonction d'étanchéité pour protéger la bobine 2 de l'huile 15. Elle permet également d'ajuster le jeu de fuite entre le piston 5 et le tube 7, sur la hauteur du piston 5 située à l'intérieur du tube 7.

Enfin, elle assure le maintien mécanique de l'ensemble des pièces situées dans la partie inférieure du piston et elle permet notamment de maintenir la paroi inférieure 53 du piston qui est encastrée dans la chemise 55.

Comme on le verra dans la suite de la description, elle permet également de canaliser la partie essentielle du flux magnétique créé par la bobine 2, lorsqu'elle est alimentée.

Dans la position de repos illustrée aux figures 2 et 4, la bille 91 est en appui par son poids sur la paroi tronconique 533.

L'huile 15 peut circuler à travers les canaux hauts 51 et 52 et les canaux bas 62 et 63, la chambre haute pression 20, la chambre basse pression 21 selon le fonctionnement décrit ci-dessous.

Le fonctionnement du tendeur de la figure 2 est expliqué ci-après en relation avec les figures 2 à 6.

Le tendeur est en général livré maintenu en positon de prémontage dans laquelle le tendeur est à une position d'entraxe minimum. Pour le montage, on libère le maintien et le tendeur se détend pour se trouver à la position de la figure 2.

A l'état de repos, illustré par la figure 2, la bille inférieure 80 est en appui sur son siège 81 et ferme le passage d'huile. La bille supérieure 91 repose par simple gravité sur le siège 533 et le passage d'huile est ouvert.

Au moment du démarrage (figures 3 et 5), la bobine 2 est alimentée de façon à fermer l'entrefer E entre la pièce d'obturation 90 et la partie inférieure 53 du piston. Le canal 52 est alors fermé.

En effet, lorsque la bobine 2 est alimentée en courant, elle crée un champ électromagnétique qui passe par le corps du piston 5, la pièce d'obturation 90, la partie inférieure 53 du piston, puis par la chemise magnétique 55.

On comprend que la pièce amagnétique 56, intercalée entre la bobine 2 et la pièce inférieure 53, force le passage du flux magnétique créé par la bobine, à travers l'entrefer E présent entre la pièce d'obturation 90 et la partie inférieure 53.

Sous l'effet de ce flux magnétique, la pièce d'obturation 90 coulisse dans le canal 52 et se déplace selon la flèche F₁ (figure 5) pour venir sensiblement en contact avec la paroi tronconique 533, du fait de la réduction de l'entrefer.

La fermeture du canal 52 est également assurée par la bille 91. Grâce au jeu radial entre la bille 91 et la cavité 904, la bille se centre parfaitement dans le fond de la paroi tronconique 533 pour fermer l'orifice calibré 530.

Une fois que l'orifice 530 est fermé, la force de maintien du dispositif d'obturation 9 sur la partie inférieure 53 du piston augmente du fait de la réduction de l'entrefer. De ce fait, cette force de maintien suffit à compenser la poussée du fluide qui s'exerce sur la bille 91 à travers l'orifice 530 qu'elle obture. En pratique, la force magnétique créée par la bobine s'exerce essentiellement sur la bille 91.

Le temps de réponse de la pièce d'obturation 90 à la fermeture dépend principalement de sa masse, des caractéristiques de la bobine 2 et de l'entrefer E. En général, la fermeture du canal 52 par le dispositif d'obturation 9 est réalisée dans un délai d'environ quelques dizaines de millisecondes.

Avantageusement, on alimente la bobine avant que le démarrage ne devienne effectif, pour être assuré de la fermeture du canal 52 lors du démarrage.

Par ailleurs, il se produit une compression du tendeur (montée de couple), et le tube 7 remonte très vite le long du piston 5 vers l'élément 11. La bille inférieure 80 est toujours plaquée sur son siège 81 et ferme le canal 63.

Le piston se trouve alors dans la position illustrée à la figure 3. Cette figure 3 montre le tendeur de la figure 2 mais selon la coupe III-III. Ainsi, sur cette figure 3, les orifices 900 et 901 de la pièce d'obturation 90 ne sont pas visibles.

Les deux dispositifs d'obturation 8 et 9 sont ainsi en position d'obturation. Il en résulte une forte et immédiate montée en pression provoquant une montée d'effort importante nécessaire pour tendre la courroie au démarrage et éviter son glissement. Le seul passage de fluide entre les chambres haute pression 20 et basse pression 21 s'effectue par les jeux de fuite entre notamment le piston 5 et le tube 7. C'est ce qui est recherché.

En effet, le démarrage du moteur par un Alterno-Démarreur Séparé (A.D.S.) engendre brièvement et localement une forte variation de tension de la courroie entre la poulie de l'A.D.S. menant et l'arbre moteur mené. Ce brin de courroie supporte un fort niveau de tension lors du démarrage par l'A.D.S. Le tendeur hydraulique selon l'invention permet de piloter la fermeture du deuxième dispositif d'obturation 9. Ceci permet d'augmenter fortement la raideur du tendeur dynamique lors du démarrage du moteur par l'A.D.S., ce qui permet d'assurer ce démarrage dans un délai bref et sans bruit supplémentaire de la transmission.

La figure 11 montre, avec la courbe C₁, l'évolution de la force d'amortissement du tendeur en fonction de la vitesse de déplacement relatif du tube 7 et du piston 5 (ou vitesse linéaire de compression), lorsque le dispositif d'obturation 9 est fermé, et à température ambiante.

La courbe C₁ confirme que la raideur dynamique du tendeur augmente très fortement, à des vitesses relativement faibles.

Le fonctionnement qui vient d'être décrit s'applique non seulement au démarrage du moteur, mais également une fois le moteur démarré lorsque l'A.D.S. est utilisé pour apporter, en parallèle du moteur, un surcroit de puissance mécanique. Ce mode de fonctionnement est communément dénommé Boost.

A l'état démarré, les fortes variations de couple sont réduites et le tendeur se trouve simplement sollicité par des variations dynamiques en partie données par l'acyclisme moteur.

L'alimentation de la bobine 2 est arrêtée et le dispositif d'obturation 9 est donc en position ouverte.

Pour décoller la pièce d'obturation 90 de son siège, on peut l'alimenter un court instant (quelques millisecondes), avec un courant négatif. Ceci permet d'annuler le champ magnétique rémanent dans les pièces magnétiques du piston et en conséquence, la force de maintien résiduelle du dispositif d'obturation 9 en position fermée.

Dans ces conditions de sollicitations alternées à courses réduites, le dispositif d'obturation 9 reste en position ouverte, avec un entrefer E également ouvert, et le dispositif d'obturation 8 est entre deux positions. Son mouvement dépend du mouvement du piston 5. On notera que l'amplitude de déplacement du piston 5 dans cet état est de l'ordre de 1 mm à 5 mm. On distingue alors deux cas :
A) Sens détente : lors du déplacement du tube 7 (à l'écart de l'élément 11), les deux dispositifs d'obturation 8 et 9 sont en position d'ouverture.

L'effet de pompage aspire en effet le dispositif d'obturation inférieur 8 vers le haut, ce qui libère le canal 63. Par ailleurs, la bille 91 est libre dans la cavité 904. L'ouverture du dispositif d'obturation 8 permet la ré-alimentation nécessaire en huile de la chambre haute pression 20. Cette ré-alimentation s'effectue depuis la chambre basse pression 21 vers la chambre haute pression 20 à partir des canaux 51 et 52, 61 et 63.

En effet, pour une efficacité maximum, la chambre haute pression 20 doit être pleine d'huile 15 en permanence. La présence d'air est fortement préjudiciable au bon fonctionnement du tendeur (aléa de l'amortissement).

Il faut noter que, dans l'état ouvert des deux dispositifs d'obturation 8 et 9, lors d'une remontée du piston 5, le tendeur fonctionne essentiellement sur la raideur du ressort 1 (au frottement d'huile près) et la tension de la courroie est dans son état minimum nécessaire au fonctionnement.
B) Sens compression (Figure 6) : le dispositif d'obturation inférieur 8 est fermé et le dispositif d'obturation supérieur 9 est ouvert.

La bille 80 reste plaquée sur son siège 81 et ferme le canal 63 et donc le passage d'huile depuis la chambre basse pression 21.

Dans des conditions de fonctionnement normal, la courbe C₂ montre l'évolution de la force d'amortissement du tendeur, en fonction de la vitesse linéaire de compression. La courbe C₂ montre qu'à l'état démarré, la caractéristique de raideur du tendeur selon l'invention est adaptée au mode régénération de l'A.D.S. Ceci favorise la durée de vie de la courroie du système de transmission, grâce à une réduction des tensions, et permet d'obtenir un rendement énergétique global du véhicule qui est amélioré.

En effet, le dispositif d'obturation supérieur 9 étant ouvert, le passage du fluide depuis la chambre haute pression 20 vers la chambre basse pression 21 s'effectue non seulement par les jeux de fuite entre le piston et le tube mais également à travers le dispositif d'obturation 9. Le passage du fluide est encore facilité par la présence des orifices axiaux 900 et 901. Par ailleurs, la bille 91 remonte dans la cavité 904 sous l'effet du passage du fluide. La raideur du tendeur augmente donc beaucoup moins rapidement lors d'une phase de compression en mode démarré que lors d'une phase de compression en mode démarrage (voir courbe C₁).

Ainsi, le tendeur selon l'invention permet d'obtenir deux modes de fonctionnement indépendants, parfaitement adaptés aux modes de fonctionnement du moteur, et ce, dès le début de chaque mode de fonctionnement.

Cette indépendance entre les modes démarré et démarrage est accrue lorsqu'on prévoit de décoller la pièce d'obturation 90 de son siège, après avoir arrêté l'alimentation de la bobine.

Dans des conditions extrêmes, à savoir dans certains cas de brusques variations de tensions en mode démarré (en limite de calage du moteur, incident par blocage intempestif d'un accessoire, etc..), les moyens de commande du deuxième dispositif d'obturation sont actionnés de telle sorte que les deux dispositifs d'obturation 8 et 9 sont fermés, ce qui produit un effort plus important pour limiter le risque de glissement de la courroie.

Par ailleurs, les moyens de commande du deuxième dispositif d'obturation sont disposés dans le corps du piston et non à l'extérieur du manchon souple qui définit le contour extérieur du tendeur. L'encombrement du tendeur selon l'invention correspond donc à l'encombrement normal d'un tendeur non piloté. Ceci est un avantage important du tendeur selon l'invention par rapport aux tendeurs pilotés connus.

Des variantes de réalisation du tendeur hydraulique selon l'invention vont maintenant être décrites.

Il est tout d'abord fait référence aux figures 9 et 10.

La figure 9 illustre la partie basse d'un piston 5, le tendeur étant à l'état libre. Ce piston 5 comporte, comme celui illustré sur les figures 2 à 6, une bobine 2 logée dans une cavité 54 du piston et protégée par une chemise 55.

La partie inférieure du canal axial 52 est élargie de façon à recevoir une pièce d'obturation 92. Cette pièce d'obturation 92 comporte une tête élargie 925 qui peut venir en butée contre l'épaulement 520 du canal 52.

Lorsque le tendeur est à l'état libre, la partie supérieure de la tête 925 est éloignée de l'épaulement 520 de la distance D.

Comme précédemment, le corps du piston 5, la chemise 55 et la partie inférieure 53 du piston sont réalisés en un matériau magnétique, comme la pièce d'obturation 92. Cependant, la pièce intermédiaire 56 est réalisée en un matériau amagnétique.

Les figures 9 et 10 montrent que la paroi axiale inférieure 923 de la pièce d'obturation 92 est plane, et non tronconique.

Dans cette variante de réalisation, la paroi en regard 534 de la partie inférieure 53 du piston est également plane.

La pièce d'obturation 92 comporte une cavité sensiblement cylindrique 924 qui débouche sur sa paroi axiale inférieure 923. Dans cette cavité 924, est prévue une bille 93, avec un jeu radial.

La figure 10 montre plus précisément l'entrefer E ménagé entre la paroi axiale inférieure 923 de la pièce d'obturation 92 et la paroi en regard 534 de la partie inférieure 53 du piston.

De façon préférée, un siège semi-sphérique 535 est créé sur la partie inférieure du piston, par poinçonnage. La présence de ce siège permet de mieux positionner la bille 93 dans l'axe de l'orifice calibré 530.

Dans une autre variante de réalisation du tendeur selon l'invention, la bille 91 ou 93 du dispositif d'obturation est rendue solidaire de la pièce d'obturation 90 ou 92. Dans ce mode de réalisation, la pièce d'obturation est placée dans le conduit 52 avec un jeu suffisant pour rattraper un éventuel défaut de coaxialité entre la bille et l'orifice calibré 530, de façon à garantir une fermeture efficace de l'orifice calibré.

Dans une autre variante, la bille du dispositif d'obturation est supprimée. Par ailleurs, le dispositif d'obturation 9 présente une paroi inférieure plane en regard d'une paroi plane de la partie inférieure du piston.

Ce mode de réalisation est d'un coût de fabrication moins élevé que les précédents mais peut présenter des performances inférieures.

Dans les modes de réalisation illustrés aux figures 2 à 10, la bague amagnétique délimite axialement une gorge qui permet de réaliser la bobine 2 directement sur le corps du piston.

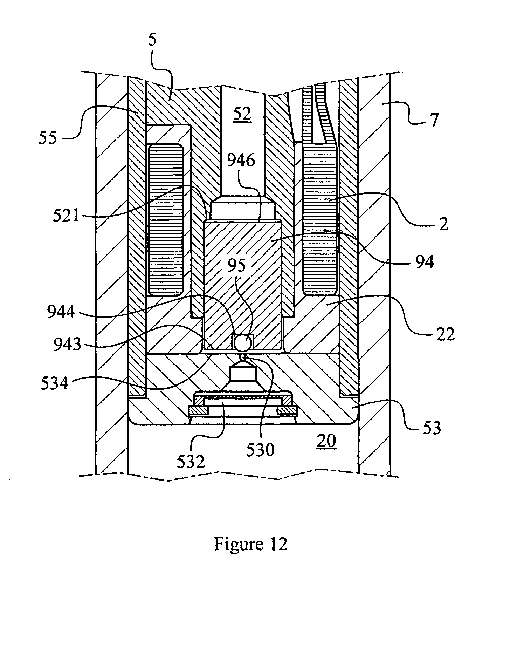

Il est fait référence à la figure 12, qui illustre la partie basse d'un piston 5 et qui montre que la bague amagnétique peut être supprimée.

La pièce d'obturation 94 est une pièce cylindrique qui ne comporte pas de tête élargie, contrairement aux pièces d'obturation 90 et 92 illustrées sur les autres figures.

C'est alors la paroi axiale supérieure 946 de la pièce d'obturation qui peut venir en butée contre l'épaulement 521 du conduit 52.

La paroi axiale inférieure 943 de la pièce d'obturation est plane, ainsi que la paroi en regard 534 de la partie inférieure 53, et une cavité 944 reçoit une bille 95, comme dans le mode de réalisation illustré aux figures 9 et 10.

La référence 532 désigne un filtre.

Par ailleurs, la bobine 2 est réalisée sur une carcasse 22 en matériau amagnétique, par exemple en plastique, l'ensemble étant ensuite rapporté dans une cavité ménagée dans le corps du piston 5.

Une autre variante consiste à rapporter dans le corps du piston une bobine réalisée avec ou sans carcasse, grâce à un fil thermo-adhérent, puis à effectuer sur cette bobine un surmoulage plastique assurant le passage du flux magnétique dans la pièce d'obturation lorsque la bobine est alimentée en courant et la protection de la bobine.

Quelques exemples de dimensionnement vont maintenant être donnés pour le tendeur hydraulique pilotable selon l'invention.

Le tendeur assure initialement à la courroie une tension statique de pré-charge, par le biais de son ressort hélicoïdal 12, qui se situe entre 700 et 1200 N. En fonctionnement, les forces axiales dynamiques mises en jeu lors de la compression du tendeur se décomposent en une composante d'amortissement et une composante élastique. Cette dernière reste faible devant la pré-charge et devant celle de la composante d'amortissement, la raideur élastique du tendeur étant de l'ordre de 30 N/mm.

En mode démarrage, le tendeur va subir des forces de compression comprises entre environ 4 et 8 kN. En mode démarré, ces forces de compression sont typiquement inférieures à 2kN.

A titre d'exemple, le tendeur hydraulique selon l'invention comporte une chambre haute pression 20 dont le diamètre est compris entre 10 et 13 mm, le diamètre de l'orifice calibré 530 étant compris entre 0,1 et 0,2 mm et le jeu radial de fuite entre le piston 5 et le tube 7 étant compris entre 5 et 20 µm.

On comprend que l'obturation de l'orifice calibré nécessite de générer une force de maintien de la pièce d'obturation 90 ou 92 qui est proportionnelle à la force d'amortissement maximale générée, soit par exemple 7 kN.

Cette force de maintien dépend de la géométrie de la pièce d'obturation.

Pour les dimensions données ci-dessus, cette force de maintien est de l'ordre de 2 N pour une pièce d'obturation dont la face d'extrémité est plane (mode de réalisation illustré aux figures 7 et 8) et environ 6N pour une pièce d'obturation dont la face d'extrémité inférieure est conique (mode de réalisation des figures 2 à 6).

A titre d'exemple, une bobine de 54 spires d'un fil de 0,5 mm de diamètre en cuivre nu, logée dans une cavité présentant un diamètre intérieur de 6 mm, un diamètre extérieur de 10,4 mm et une hauteur de 8,6 mm, et alimentée par un courant de 1,9 A permet de générer une force de maintien de 6N, avec un dispositif d'obturation d'un diamètre de 5 mm, délimitant un entrefer de 0,2 mm.

De façon générale, il est préférable que l'entrefer E soit inférieur à 0,2 mm, voire 0,15 mm.

Par ailleurs, le jeu radial entre la pièce d'obturation 90, 92 et le canal 52 est, de préférence, inférieur à 100 µm.

Pour assurer la fermeture du deuxième dispositif d'obturation, la bobine devra bien sûr être alimentée avec un courant plus important. Des niveaux de courant plus faibles pourront ensuite être appliqués pour maintenir le dispositif d'obturation 9 en position fermée.

De façon préférée, les pièces du piston 5 qui sont réalisées en matériau magnétique sont de préférence en acier doux et par exemple en XC 18, XC 48 ou XC 75.

Les signes de référence insérés après les caractéristiques techniques figurant dans les revendications ont pour seul but de faciliter la compréhension de ces dernières et ne sauraient en limiter la portée.

## Revendications

1. Tendeur hydraulique pilotable pour un organe de transmission de puissance ayant un premier mode de fonctionnement avec des efforts élevés et un deuxième mode de fonctionnement avec des efforts moins élevés, comportant :
- un premier (10) et un deuxième (11) éléments de montage respectivement inférieur et supérieur, disposés à des extrémités axiales opposées,
- un tube (7) solidaire du premier élément de montage (10) à l'intérieur duquel coulisse un piston (5) solidaire du deuxième élément de montage (11)
- un manchon élastique (3) entourant le tube (7) et le piston (5) et relié de manière étanche aux premier (10) et deuxième (11) éléments de montage, ce manchon élastique définissant une chambre basse pression (21) pour un fluide hydraulique (15),
- un ressort (12) précontraint entre le premier (10) et le deuxième (11) éléments de montage,
- un premier canal (62, 63) ménagé dans le premier (10) élément de montage pour mettre en communication la chambre basse pression (21) et l'intérieur du tube (7), ledit premier canal étant muni, à son extrémité débouchant dans le tube (7), d'un premier dispositif d'obturation (8),
- un deuxième canal (51, 52) ménagé dans ledit piston (5), dont une extrémité débouche à l'intérieur du tube (7) à travers une partie inférieure (53) du piston, ledit deuxième canal étant susceptible de relier une chambre haute pression (20), située entre les extrémités débouchantes des premier (62, 63) et deuxième (51, 52) canaux, et la chambre basse pression (21), et
- un deuxième dispositif d'obturation (9) disposé dans le deuxième canal et associé à des moyens de commande **caractérisé en ce que** les moyens de commande du deuxième dispositif d'obturation sont situés dans le piston.

2. Tendeur selon la revendication 1, **caractérisé en ce que** lesdits moyens de commande comprennent une bobine électromagnétique (2) susceptible d'être alimentée en courant pour créer un champ magnétique passant par le deuxième dispositif d'obturation (9).

3. Tendeur selon la revendication 2, **caractérisé en ce que** le deuxième dispositif d'obturation comprend une pièce d'obturation (90, 92, 94) en matériau magnétique, l'alimentation en courant de la bobine (2) provoquant le déplacement de ladite pièce d'obturation contre la partie inférieure (53) du piston, elle-même en matériau magnétique, le deuxième dispositif d'obturation étant alors en position fermée.

4. Tendeur selon la revendication 3, **caractérisé en ce que** le deuxième dispositif d'obturation comprend également une bille (91, 93, 95) placée dans une cavité (904, 924, 944) de ladite pièce d'obturation (90, 92, 94) débouchant vers la partie inférieure (53) du piston, ladite bille étant destinée à obturer ledit deuxième canal en position fermée du dispositif d'obturation.

5. Tendeur selon la revendication 3 ou 4, **caractérisé en ce que** les parois en regard (903, 533) de la pièce d'obturation (90) et de la paroi inférieure (53) du piston sont coniques.

6. Tendeur selon la revendication 3 ou 4, **caractérisé en ce que** les parois en regard (923, 534 ; 943, 534) de la pièce d'obturation (92, 94) et de la partie inférieure (53) du piston sont sensiblement planes.

7. Tendeur selon la revendication 6, **caractérisé en ce que** la paroi (534) comporte, autour du deuxième canal, un siège (535) pour ladite bille.

8. Tendeur selon l'une des revendications 2 à 7, **caractérisé en ce que** ladite pièce d'obturation (90, 92, 94) est de forme générale cylindrique.

9. Tendeur selon la revendication 8, caractérisé en ce ladite pièce d'obturation (90) comporte au moins un orifice (900, 901) s'étendant selon l'axe du tendeur et sur toute la hauteur de ladite pièce.

10. Tendeur selon la revendication 9, **caractérisé en ce que** ledit au moins un orifice (900, 901) débouche sur la paroi extérieure cylindrique (902) de ladite pièce.

11. Tendeur selon l'une des revendications 3 à 10, **caractérisé en ce que** ledit deuxième canal (52) comporte des moyens (520, 521) de limitation du mouvement de ladite pièce d'obturation (90, 92, 94), à l'écart de la partie inférieure (53) du piston.

12. Tendeur selon l'une des revendications 1 à 11, **caractérisé en ce que** le premier dispositif d'obturation comporte une bille (80) sensible à la gravité.

13. Tendeur selon l'une des revendications 1 à 12, **caractérisé en ce que** le premier élément de montage (10) présente un élément de fixation (13) sur lequel est monté un premier embout (6) comportant ledit premier canal (62, 63).

14. Tendeur selon l'une des revendications 1 à 13, **caractérisé en ce que** le deuxième élément de montage (11) présente un élément de fixation sur lequel est monté un deuxième embout (4) sur lequel est monté ledit piston (5).

15. Tendeur selon l'une des revendications 2 à 14, **caractérisé en ce qu'**il comprend une chemise (55) réalisée en un matériau magnétique pour fermer une cavité annulaire (54) formée dans le corps de piston (5) et dans laquelle la bobine (2) est logée.

## Patentansprüche

1. Steuerbarer hydraulischer Spanner für ein Leistungsübertragungselement mit einem ersten Funktionsmodus mit erhöhten Kräften und einem zweiten Funktionsmodus mit weniger erhöhten Kräften, der aufweist:
ein erstes Montageelement (10) und ein zweites Montageelement (11), die ein unteres bzw. ein oberes Montageelement sind und die sich an axial entgegengesetzten Enden befinden,
ein Rohr (7), das mit dem ersten Montageelement (10) fest verbunden ist, im Inneren von welchen ein Kolben (5) gleitet, der mit dem zweiten Montageelement (11) fest verbunden ist,
eine elastische Hülse (3), die das Rohr (7) und den Kolben (5) umgibt und die in dichter Weise mit dem ersten Montageelement (10) und dem zweiten Montageelement (11) verbunden ist, wobei diese elastische Hülse eine Niederdruckkammer (21) für ein hydraulisches Fluid (15) definiert,
eine Feder (12), die zwischen dem ersten Montageelement (10) und dem zweiten Montageelement (11) vorgespannt ist,
einen ersten Kanal (62, 63), der in dem erstem Montageelement (10) vorgesehen ist, um die Niederdruckkammer (21) und das Innere des Rohres (7) zu verbinden, wobei der erste Kanal an seinem Ende, das in das Rohr (7) mündet, mit einer ersten Absperrvorrichtung (8) versehen ist,
einen zweiten Kanal (51, 52), der in dem Kolben (5) vorgesehen ist und dessen eines Ende im Inneren des Rohrs (7) durch einen unteren Teil (52) des Kolbens hindurch mündet, wobei der zweite Kanal in der Lage ist, eine Hochdruckkammer (20), die sich zwischen den zwei mündenden Enden des ersten Kanals (63, 63) und des zweiten Kanals (51, 52) befindet, und die Niederdruckkammer (21) zu verbinden, und
eine zweite Absperrvorrichtung (9), die sich in dem zweiten Kanal befindet und die mit einer Steuereinrichtung verbunden ist,
**dadurch gekennzeichnet, dass** die Steuereinrichtung der zweiten Absperrvorrichtung in dem Kolben angeordnet ist.

2. Spanner nach Anspruch 1, **dadurch gekennzeichnet, dass** die Steuereinrichtung eine elektromagnetische Spule (2) aufweist, die in der Lage ist, mit Strom gespeist zu werden, damit ein Magnetfeld erzeugt wird, das durch die zweite Sperrvorrichtung (9) verläuft.

3. Spanner nach Anspruch 2, **dadurch gekennzeichnet, dass** die zweite Sperrvorrichtung ein Sperrstück (90, 92, 94) aus Magnetmaterial aufweist, wobei die Stromzuführung zur Spule (2) die Verschiebung des Sperrstücks gegen den unteren Teil (53) des Kolbens hervorruft, wobei dieser aus Magnetmaterial ist, wobei die zweite Sperrvorrichtung dann in der geschlossenen Position ist.

4. Spanner nach Anspruch 3, **dadurch gekennzeichnet, dass** die zweite Sperrvorrichtung ebenfalls eine Kugel (91, 93, 95) aufweist, die sich in einem Hohlraum (904, 924, 944) des Sperrstücks (90, 92, 94) befindet, der zum unteren Teil (53) des Kolbens mündet, wobei die Kugel dazu bestimmt ist, den zweiten Kanal in der geschlossenen Position der Sperrvorrichtung abzusperren.

5. Spanner nach Anspruch 3 oder 4, **dadurch gekennzeichnet, dass** die Wände (903, 533) gegenüber dem Sperrstück (90) und der unteren Wand (53) des Kolbens konisch sind.

6. Spanner nach Anspruch 3 oder 4, **dadurch gekennzeichnet, dass** die Wände (923, 534; 943, 534) gegenüber dem Sperrstück (92, 94) und dem unteren Teil (53) des Kolbens im Wesentlichen eben sind.

7. Spanner nach Anspruch 6, **dadurch gekennzeichnet, dass** die Wand (534) um den zweiten Kanal einen Sitz (535) für die Kugel aufweist.

8. Spanner nach einem der Ansprüche 2 bis 7, **dadurch gekennzeichnet, dass** das Sperrstück (90, 92, 94) im Wesentlichen Zylinderform hat.

9. Spanner nach Anspruch 8, **dadurch gekennzeichnet, dass** das Sperrstück (90) zumindest eine Öffnung (900, 901) aufweist, die sich entlang der Achse des Spanners und über die gesamte Höhe des Stücks erstreckt.

10. Spanner nach Anspruch 9, **dadurch gekennzeichnet, dass** die zumindest eine Öffnung (900, 901) auf der zylindrischen Außenwand (902) des Stücks mündet.

11. Spanner nach einem der Ansprüche 3 bis 10, **dadurch gekennzeichnet, dass** der zweite Kanal (52) eine Einrichtung (520, 521) zum Begrenzen der Bewegung des Sperrstücks (90, 92, 94) im Abstand zum unteren Teil (53) des Kolbens aufweist.

12. Spanner nach einem der Ansprüche 1 bis 11, **dadurch gekennzeichnet, dass** die erste Sperrvorrichtung eine Kugel (80), die auf Gravitationskraft anspricht, aufweist.

13. Spanner nach einem der Ansprüche 1 bis 12, **dadurch gekennzeichnet, dass** das erste Montageelement (10) ein Befestigungselement (13) aufweist, an dem ein erstes Ansatzstück (6) montiert ist, das den ersten Kanal (62, 63) aufweist.

14. Spanner nach einem der Ansprüche 1 bis 13, **dadurch gekennzeichnet, dass** das zweite Montageelement (11) ein Befestigungselement aufweist, an dem ein zweites Ansatzstück (4) montiert ist, an dem der Kolben (5) montiert ist.

15. Spanner nach einem der Ansprüche 2 bis 14, **dadurch gekennzeichnet, dass** dieser einen Mantel (55) aufweist, der aus Magnetmaterial umgesetzt ist, um einen ringförmigen Hohlraum (54) zu schließen, der in dem Körper des Kolbens (5) ausgebildet ist und in dem die Spule (2) untergebracht ist.

## Claims

1. A controllable hydraulic turnbuckle for a power transmission member having a first mode of operation with high forces and a second mode of operation with lower forces, including:
- first (10) and second (11), respectively lower and upper assembly elements disposed at opposite axial ends;
- a tube (7) rigidly connected to the first assembly element (10) inside which slides a piston (5) rigidly connected to the second assembly element (11);
- a resilient sleeve (3) surrounding the tube (7) and the piston (5) and connected and sealed to the first (10) and second (11) assembly elements, said resilient sleeve defining a low-pressure chamber (21) for a hydraulic fluid (15);
- a prestressed spring (12) between the first (10) and second (11) assembly elements;
- a first channel (62, 63) provided inside the first assembly element (10) for placing the low-pressure chamber (21) and the interior of the tube (7) in communication, said first channel being provided at the end thereof opening into the tube (7) with a first plugging device (8);
- a second channel (51, 52) provided in said piston (5), one end of which opens into the interior of the tube (7) through a lower portion (53) of the piston, said second channel being adapted to connect a high-pressure chamber (20) located between the open ends of the first (62, 63) and second (51, 52) channels and the low-pressure chamber (21); and
- a second plugging device (9) disposed in the second channel and associated with control means **characterized in that** control means of the second plugging device are located in the piston.

2. The turnbuckle claimed in claim 1, **characterized in that** said control means comprise an electromagnetic coil (2) adapted to be supplied with current to create a magnetic field passing through the second plugging device (9).

3. The turnbuckle claimed in claim 2, **characterized in that** the second plugging device comprises a magnetic material plugging part (90, 92, 94) supplying the coil (2) with current causing movement of said plugging part against the lower part (53) of the piston, itself in magnetic material, the second plugging device then being in the closed position.

4. The turnbuckle claimed in claim 3, **characterized in that** the second plugging device also comprises a ball (91, 93, 95) placed in a cavity (904, 924, 944) of said plugging part (90, 92, 94) opening toward the interior part (53) of the piston, said ball being intended to plug said second channel in the closed position of the plugging device.

5. The turnbuckle claimed in claim 3 or claim 4, **characterized in that** the facing walls (903, 533) of the plugging part (90) and the lower wall (53) of the piston are conical.

6. The turnbuckle claimed in claim 3 or claim 4, **characterized in that** the facing walls (923, 534; 943, 534) of the plugging part (92, 94) and the lower part (53) of the piston are substantially plane.

7. The turnbuckle claimed in claim 6, **characterized in that** the wall (534) includes, around the second channel, a seat (535) for said ball.

8. The turnbuckle claimed in any one of claims 2 to 7, **characterized in that** said plugging part (90, 92, 94) is of cylindrical general shape.

9. The turnbuckle claimed in claim 8, **characterized in that** said plugging part (90) includes at least one orifice (900, 901) extending along the axis of the turnbuckle and over all the height of said part.

10. The turnbuckle claimed in claim 9, **characterized in that** said at least one orifice (900, 901) opens onto the cylindrical exterior wall (902) of said part.

11. The turnbuckle claimed in any one of claims 3 to 10, **characterized in that** said second channel (52) includes means (520, 521) for limiting movement of said plugging part (90, 92, 94) away from the lower part (53) of the piston.

12. The turnbuckle claimed in any one of claims 1 to 11, **characterized in that** the first plugging device includes a gravity-sensitive ball (80).

13. The turnbuckle claimed in any one of claims 1 to 12, **characterized in that** the first assembly member (10) includes a fixing member (13) on which is mounted a first endpiece (6) including said first channel (62, 63).

14. The turnbuckle claimed in any one of claims 1 to 13, **characterized in that** the second assembly member (11) includes a fixing member on which is mounted a second endpiece (4) on which said piston (5) is mounted.

15. The turnbuckle claimed in any one of claims 2 to 14, **characterized in that** it comprises a jacket (55) made of a magnetic material to close an annular cavity (54) formed in the body of the piston (5) and in which the coil (2) is located.
